# EUROPEAN PATENT SPECIFICATION

(11) **EP 4 160 868 B1**
(45) Date of publication and mention of the grant of the patent: **29.10.2025**
(21) Application number: 21813670.3
(22) Date of filing: 27.05.2021
(51) Int. Cl.: H02J 13/00, F24F 11/47, G06Q 50/00, H02J 3/00, H02J 3/14, G06Q 10/063, G06Q 50/06, G06Q 30/0201, G06Q 50/16, G06Q 50/163, F25B 13/00, F25B 31/00, F25B 47/02, F25B 49/02

(54) **OPERATION CONTROL SYSTEM, OPERATION CONTROL DEVICE, AND OPERATION CONTROL METHOD**
BETRIEBSSTEUERUNGSSYSTEM, BETRIEBSSTEUERUNGSVORRICHTUNG UND BETRIEBSSTEUERUNGSVERFAHREN
SYSTÈME, DISPOSITIF ET PROCÉDÉ DE COMMANDE D'OPÉRATION

(30) Priority: 28.05.2020 JP 2020093321
(43) Date of publication of application: 05.04.2023
(73) Proprietor: Daikin Industries, Ltd., Osaka-shi, Osaka 530-0001 (JP)
(72) Inventor: NAKAO, Takuya, Osaka-shi, Osaka 530-8323 (JP)
(74) Representative: Global IP Europe Patentanwaltskanzlei
(86) International application number: PCT/JP2021/020247
(87) International publication number: WO 2021/241698

(56) References cited:
- JP-A- 2009 210 161
- JP-A- 2013 142 529
- JP-A- 2016 208 747
- JP-A- 2020 065 346
- JP-B1- 6 191 897
- US-A1- 2009 240 381
- SHUN MATSUKAWA ET AL: "Prediction model on disturbance of maintenance operation during real-time pricing adaptive control for building air-conditioners", IEEJ TRANSACTIONS ON ELECTRICAL AND ELECTRONIC ENGINEERING, JOHN WILEY & SONS, INC, US, vol. 14, no. 8, 17 May 2019 (2019-05-17), pages 1219 - 1225, XP072435168, ISSN: 1931-4973, DOI: 10.1002/TEE.22921

## Description

### TECHNICAL FIELD

The present disclosure relates to an operation control system, an operation control apparatus, and an operation control method for performing demand response control.

### BACKGROUND ART

As described in Patent Document 1 (Japanese Unexamined Patent Application Publication No. 2001-197661), a system has been conventionally used that performs demand response control for adjusting the amount of electric power used by a refrigerant cycle apparatus, such as an air conditioner, installed in a property, so that the electric power demanded by the refrigerant cycle apparatus does not exceed a predetermined supplied electric power.

JP 2020 065346 A discloses an operation control system comprising: a storage unit configured to store electric-power information; and a determination unit configured to determine, on a basis of the electric-power information, a special-operation timing at which a special operation of a refrigerant cycle apparatus installed in at least one property or at least one area is to be executed, wherein: the electric-power information includes electric-power supply demand adjustment request information related to an electric-power supply demand adjustment request from an outside to the property or the area; and the electric-power supply demand adjustment request information includes at least one of a negawatt request time period that includes at least one time period that is a target of the electric-power supply demand adjustment request with a trend toward suppressing electric-power consumption, and a posiwatt request time period that includes at least one time period that is a target of the electric-power supply demand adjustment request with a trend toward promoting electric-power consumption.

### SUMMARY OF INVENTION

### <Technical Problem>

However, the conventional system that performs the demand response control does not execute special operations (for example, an oil return operation and a defrosting operation) of the refrigerant cycle apparatus on the basis of a request from the outside related to an electric-power supply demand adjustment with a trend toward suppressing or promoting electric-power consumption, and thus the efficiency of the demand response control may decrease.

### <Solution to Problem>

The object above is achieved by any of the operation control system defined by the appended claim 1, the operation control apparatus defined by the appended claim 11, and the operation control method defined by the appended claim 12. Further advantageous effects can be obtained by the preferred embodiments defined by the appended dependent claims.

An operation control system according to a first reference example includes a storage unit and a determination unit. The storage unit stores electric-power information. On the basis of the electric-power information, the determination unit determines a special-operation timing at which a special operation of a refrigerant cycle apparatus installed in at least one property or at least one area is to be executed. The electric-power information includes at least one of electric-power supply demand adjustment request information related to an electric-power supply demand adjustment request from the outside to the property or the area, and electric-power market price information related to an electric-power market price. The special operation includes at least one of a cooling-time oil return operation that is an oil return operation during a cooling operation of the refrigerant cycle apparatus, a heating-time oil return operation that is an oil return operation during a heating operation of the refrigerant cycle apparatus, and a defrosting operation during a heating operation of the refrigerant cycle apparatus.

On the basis of at least one of the electric-power supply demand adjustment request from the outside and the electric-power market price, the operation control system according to the first reference example determines timings at which the special operations, such as the oil return operation and the defrosting operation, are to be executed, to suppress a decrease in the efficiency of demand response control.

An operation control system according to a second reference example is the operation control system according to the first reference example, in which the electric-power information includes the electric-power supply demand adjustment request information. The electric-power supply demand adjustment request information includes a negawatt request time period that includes at least one time period that is a target of the electric-power supply demand adjustment request with a trend toward suppressing electric-power consumption. The determination unit determines at least one of the special-operation timing at which the cooling-time oil return operation is to be avoided in the negawatt request time period, and the special-operation timing at which at least one of the heating-time oil return operation and the defrosting operation is to be executed in the negawatt request time period.

On the basis of the electric-power supply demand adjustment request with a trend toward suppressing electric-power consumption, the operation control system according to the second reference example determines a timing at which the special operation in which the consumed electric power tends to diminish is to be executed, to suppress a decrease in the efficiency of demand response control.

An operation control system according to a third reference example is the operation control system according to the first reference example or the second reference example, in which the electric-power information includes the electric-power supply demand adjustment request information. The electric-power supply demand adjustment request information includes a posiwatt request time period that includes at least one time period that is a target of the electric-power supply demand adjustment request with a trend toward promoting electric-power consumption. The determination unit determines at least one of the special-operation timing at which the cooling-time oil return operation is to be executed in the posiwatt request time period, the special-operation timing at which at least one of the heating-time oil return operation and the defrosting operation is to be avoided in the posiwatt request time period, and the special-operation timing at which at least one of the heating-time oil return operation and the defrosting operation is to be executed in a time period immediately before the posiwatt request time period.

On the basis of the electric-power supply demand adjustment request with a trend toward promoting electric-power consumption, the operation control system according to the third reference example determines a timing at which the special operation in which the consumed electric power tends to increase is to be executed, to suppress a decrease in the efficiency of demand response control.

An operation control system according to a fourth reference example is the operation control system according to any one of the first to third reference examples, in which the determination unit includes a first prediction unit and a first ascertainment unit. On the basis of operation data on the refrigerant cycle apparatus, the first prediction unit predicts a timing at which the special operation is to be executed. The first ascertainment unit ascertains whether or not the special operation can be executed in a request target time period that includes at least one time period that is a target of the electric-power supply demand adjustment request. The determination unit determines the special-operation timing on the basis of a prediction result of the first prediction unit and an ascertainment result of the first ascertainment unit.

On the basis of the prediction result of a timing at which the special operation is to be executed, the operation control system according to the fourth reference example determines the timing at which the special operation is to be executed, to suppress a decrease in the efficiency of demand response control.

An operation control system according to a fifth reference example is the operation control system according to the fourth reference example, in which the first ascertainment unit ascertains whether or not a timing predicted by the first prediction unit at which the special operation is to be executed can be shifted to the request target time period.

On the basis of the prediction result of a timing at which the special operation is to be executed, the operation control system according to the fifth reference example determines the timing at which the special operation is to be executed, to suppress a decrease in the efficiency of demand response control.

An operation control system according to a sixth reference example is the operation control system according to the fourth reference example or the fifth reference example, in which the determination unit further includes a second prediction unit. The second prediction unit predicts an increase and a diminishment in electric power to be consumed by the refrigerant cycle apparatus due to the special operation. On the basis of, in addition, a prediction result of the second prediction unit, the determination unit determines the special-operation timing.

On the basis of the prediction result of electric power to be consumed by the special operation, the operation control system according to the sixth reference example determines a timing at which the special operation is to be executed, to suppress a decrease in the efficiency of demand response control.

An operation control system according to a seventh reference example is the operation control system according to the sixth reference example, in which in a case where the second prediction unit predicts a diminishment in the electric power to be consumed, the determination unit determines the special-operation timing so that the special-operation timing is to be included in at least one time period that is a target of the electric-power supply demand adjustment request with a trend toward suppressing electric-power consumption. In a case where the second prediction unit predicts an increase in the electric power to be consumed, the determination unit determines the special-operation timing so that the special-operation timing is to be included in at least one time period that is a target of the electric-power supply demand adjustment request with a trend toward promoting electric-power consumption.

On the basis of the prediction result of electric power to be consumed by the special operation, the operation control system according to the seventh reference example determines a timing at which the special operation is to be executed, to suppress a decrease in the efficiency of demand response control.

An operation control system according to an eighth reference example is the operation control system according to any one of the first to seventh reference examples, in which the electric-power information includes the electric-power supply demand adjustment request information. The electric-power supply demand adjustment request information includes a consumed-electric-power aim value at a predetermined time, and a second ascertainment unit is further provided. The second ascertainment unit compares the consumed-electric-power aim value with a predicted consumed-electric-power value based on operation data on the refrigerant cycle apparatus to ascertain whether the electric-power supply demand adjustment request is a request with a trend toward suppressing electric-power consumption or a request with a trend toward promoting electric-power consumption.

The operation control system according to the eighth reference example can suppress a decrease in the efficiency of demand response control by ascertaining whether the electric-power supply demand adjustment request is a request with a trend toward suppressing electric-power consumption or a request with a trend toward promoting electric-power consumption.

An operation control system according to a ninth reference example is the operation control system according to any one of the first to eighth reference examples, in which the electric-power information further includes peak information including at least one peak time that is a time at which a peak occurs in a trend related to total electric power of the property or the area. The determination unit determines the special-operation timing on the basis of at least one of the electric-power supply demand adjustment request information and the electric-power market price information, and the peak information.

On the basis of the peak information, the operation control system according to the ninth reference example determines a timing at which the special operation is to be executed, to suppress a decrease in the efficiency of demand response control.

An operation control system according to a tenth reference example is the operation control system according to any one of the first to ninth reference examples, in which the electric-power information includes the electric-power market price information. The determination unit determines the special-operation timing by regarding a time period in which an electric-power market price included in the electric-power market price information is equal to or more than a first threshold, as at least one time period that is a target of the electric-power supply demand adjustment request with a trend toward suppressing electric-power consumption. The determination unit determines the special-operation timing by regarding a time period in which an electric-power market price included in the electric-power market price information is equal to or less than a second threshold, as at least one time period that is a target of the electric-power supply demand adjustment request with a trend toward promoting electric-power consumption.

On the basis of the electric-power market price information, the operation control system according to the tenth reference example determines a timing at which the special operation is to be executed, to suppress a decrease in the efficiency of demand response control, and reduce the electric-power rate.

An operation control apparatus according to an eleventh reference example includes a storage unit and a determination unit. The storage unit stores electric-power information. On the basis of the electric-power information, the determination unit determines a special-operation timing at which a special operation of a refrigerant cycle apparatus installed in at least one property or at least one area is to be executed. The electric-power information includes at least one of electric-power supply demand adjustment request information related to an electric-power supply demand adjustment request from the outside to the property or the area, and electric-power market price information related to an electric-power market price. The special operation includes at least one of a cooling-time oil return operation that is an oil return operation during a cooling operation of the refrigerant cycle apparatus, a heating-time oil return operation that is an oil return operation during a heating operation of the refrigerant cycle apparatus, and a defrosting operation during a heating operation of the refrigerant cycle apparatus.

On the basis of at least one of the electric-power supply demand adjustment request from the outside and the electric-power market price, the operation control apparatus according to the eleventh reference example determines timings at which the special operations, such as the oil return operation and the defrosting operation, are to be executed, to suppress a decrease in the efficiency of demand response control.

An operation control method according to a twelfth reference example includes a first step and a second step. In the first step, electric-power information is stored. In the second step, on the basis of the electric-power information, determined is a special-operation timing at which a special operation of a refrigerant cycle apparatus installed in at least one property or at least one area is to be executed. The electric-power information includes at least one of electric-power supply demand adjustment request information related to an electric-power supply demand adjustment request from the outside to the property or the area, and electric-power market price information related to an electric-power market price. The special operation includes at least one of a cooling-time oil return operation that is an oil return operation during a cooling operation of the refrigerant cycle apparatus, a heating-time oil return operation that is an oil return operation during a heating operation of the refrigerant cycle apparatus, and a defrosting operation during a heating operation of the refrigerant cycle apparatus.

On the basis of at least one of the electric-power supply demand adjustment request from the outside and the electric-power market price, the operation control method according to the twelfth reference example determines timings at which the special operations, such as the oil return operation and the defrosting operation, are to be executed, to suppress a decrease in the efficiency of demand response control.

### BRIEF DESCRIPTION OF THE DRAWINGS

FIG. 1 is a configuration diagram of an operation control system 100 according to a first embodiment.
FIG. 2 is a configuration diagram of refrigerant cycle apparatuses 51a, ...
FIG. 3 is a graph showing an example of a consumed-electric-power trend of a cooling-time oil return operation.
FIG. 4 is a graph showing an example of a consumed-electric-power trend of a heating-time oil return operation and a defrosting operation.
FIG. 5 is a configuration diagram of a management server 50 according to Modifications A to C.
FIG. 6 is a flowchart for determining a special-operation timing in Modification G.

### DESCRIPTION OF EMBODIMENTS

### -First Embodiment-

### (1) Overall Configuration of Operation Control System 100

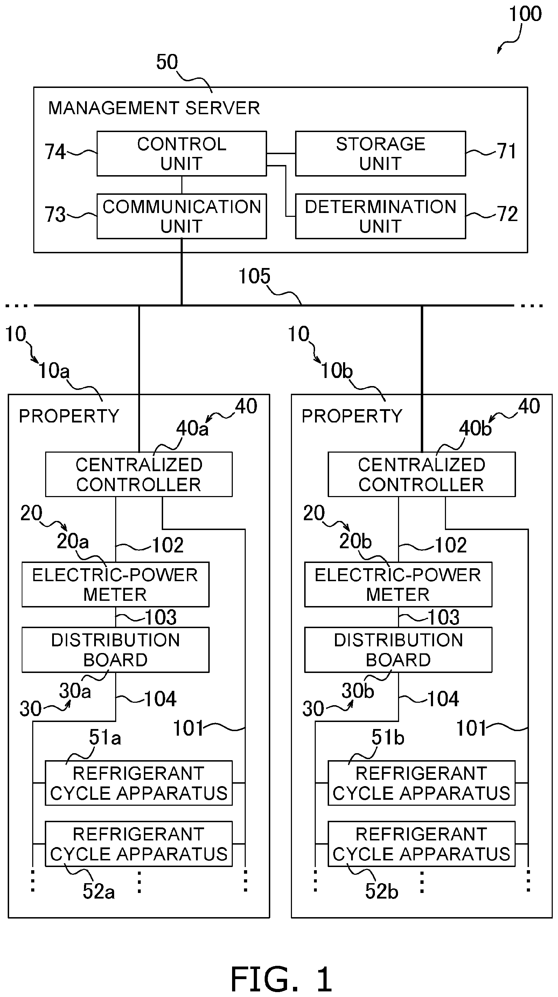

As shown in FIG. 1, an operation control system 100 according to a first embodiment is a system that controls the operations of refrigerant cycle apparatuses 51a, ... (51a, 52a, ..., 51b, 52b, ...) installed in at least one property 10 (10a, 10b, ...). The refrigerant cycle apparatuses 51a, ... are apparatuses having at least one of a freezing function and a refrigeration function. In the present embodiment, the refrigerant cycle apparatuses 51a, ... are air conditioning apparatuses that perform at least one of a cooling operation and a heating operation for conditioning the air in predetermined air-conditioning target spaces in the properties 10. The refrigerant cycle apparatuses 51a, ... may be other equipment except an air conditioning apparatus, or may be combinations of an air conditioning apparatus and other equipment. The other equipment is, for example, a freezing apparatus and a refrigeration apparatus for adjusting the temperature inside a showcase installed in the property 10.

The operation control system 100 is used as a system for performing demand response control. The demand response control is control for adjusting the amount of electric power used by the refrigerant cycle apparatuses 51a, ... so that the electric power demanded by the refrigerant cycle apparatuses 51a, ... does not exceed a predetermined supplied electric power. The operation control system 100 adjusts the amount of electric power used by the refrigerant cycle apparatuses 51a, ... on the basis of a request from the outside related to an electric-power supply demand adjustment with a trend toward suppressing or promoting the electric-power consumption of the refrigerant cycle apparatuses 51a, ... The request from the outside related to an electric-power supply demand adjustment is, for example, an input related to an electric-power supply demand adjustment input by an administrator or the like of the operation control system 100.

The operation control system 100 mainly includes the refrigerant cycle apparatuses 51a, ..., electric-power meters 20 (20a, 20b, ...), distribution boards 30 (30a, 30b, ...), centralized controllers 40 (40a, 40b, ...), and a management server 50. The refrigerant cycle apparatuses 51a, ..., the electric-power meter 20, the distribution board 30, and the centralized controller 40 are installed in each property 10. In each property 10, the refrigerant cycle apparatuses 51a, ... are coupled to the centralized controller 40 via a first line 101. In each property 10, the electric-power meter 20 is coupled to the centralized controller 40 via a second line 102. In each property 10, the distribution board 30 is coupled to the electric-power meter 20 via a third line 103, and is coupled to the refrigerant cycle apparatuses 51a, ... via a fourth line 104.

The electric-power meter 20 of each property 10 measures the electric power consumed by each of the refrigerant cycle apparatuses 51a, ... installed in the property 10.

The distribution board 30 of each property 10 supplies a predetermined amount of electric power from an external power source to each of the refrigerant cycle apparatuses 51a, ... installed in the property 10.

The centralized controller 40 of each property 10 controls each of the refrigerant cycle apparatuses 51a, ... installed in the property 10. For example, the centralized controller 40 receives, from the electric-power meter 20, information related to the electric power consumed by each of the refrigerant cycle apparatuses 51a, ..., and transmits, to the distribution board 30, information related to the electric power to be supplied to each of the refrigerant cycle apparatuses 51a, ...

The management server 50 is installed outside the properties 10, and is coupled to the centralized controller 40 of each property 10 via a public line 105, such as the Internet. The management server 50 controls the refrigerant cycle apparatuses 51a, ... via the centralized controllers 40.

### (2) Configurations and Action of Refrigerant Cycle Apparatuses 51a, ...

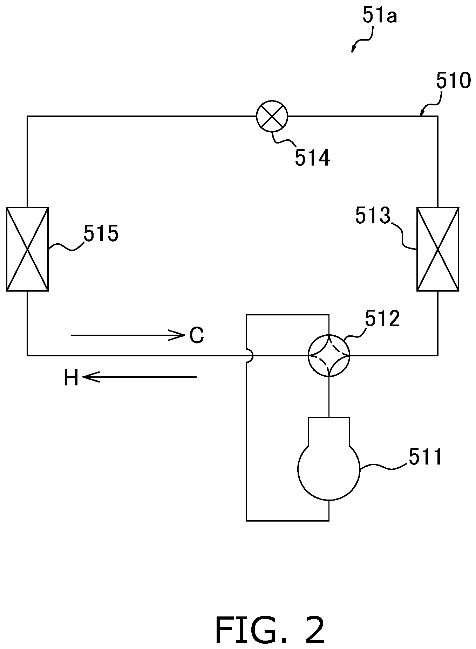

As shown in FIG. 2, the refrigerant cycle apparatuses 51a, ... mainly include a compressor 511, a four-way switching valve 512, a heat-source-side heat exchanger 513, an expansion mechanism 514, and a usage-side heat exchanger 515. These are coupled to each other via a refrigerant pipe to form a refrigerant circuit 510 through which a refrigerant circulates.

The compressor 511 sucks and compresses low-pressure gas refrigerant flowing through the refrigerant circuit 510 to discharge high-pressure gas refrigerant.

The four-way switching valve 512 switches coupling states of the refrigerant pipe of the refrigerant circuit 510. In a case where the refrigerant cycle apparatuses 51a, ... perform a cooling operation, the four-way switching valve 512 forms a coupling state indicated by solid lines in FIG. 2. In a case where the refrigerant cycle apparatuses 51a, ... perform a heating operation, the four-way switching valve 512 forms a coupling state indicated by broken lines in FIG. 2.

The heat-source-side heat exchanger 513 performs heat exchange between air and the refrigerant circulating through the refrigerant circuit 510. In a case where the refrigerant cycle apparatuses 51a, ... perform a cooling operation, the heat-source-side heat exchanger 513 functions as a radiator (condenser). In a case where the refrigerant cycle apparatuses 51a, ... perform a heating operation, the heat-source-side heat exchanger 513 functions as a heat absorber (evaporator).

The expansion mechanism 514 is an electronic expansion valve whose opening degree can be adjusted. The expansion mechanism 514 decompresses the refrigerant flowing through the refrigerant pipe of the refrigerant circuit 510. The expansion mechanism 514 controls the flow rate of the refrigerant flowing through the refrigerant pipe of the refrigerant circuit 510.

The usage-side heat exchanger 515 performs heat exchange between air and the refrigerant circulating through the refrigerant circuit 510. In a case where the refrigerant cycle apparatuses 51a, ... perform a cooling operation, the usage-side heat exchanger 515 functions as a heat absorber (evaporator). In a case where the refrigerant cycle apparatuses 51a, ... perform a heating operation, the usage-side heat exchanger 515 functions as a radiator (condenser).

In a case where the refrigerant cycle apparatuses 51a, ... are an air conditioning apparatus, the compressors 511, the four-way switching valve 512, the heat-source-side heat exchanger 513, and the expansion mechanism 514 are installed outdoors, such as on the roof of the property 10, and the usage-side heat exchanger 515 is installed in the air-conditioning target space of the property 10.

In a case where the refrigerant cycle apparatuses 51a, ... are an air conditioning apparatus, the refrigerant cycle apparatuses 51a, ... may include a plurality of usage-side heat exchangers 515 coupled to one heat-source-side heat exchanger 513.

The refrigerant used in the refrigerant cycle apparatuses 51a, ... generates a change accompanied by phase transition, such as condensation or evaporation, in the heat-source-side heat exchanger 513 and the usage-side heat exchanger 515. However, the refrigerant does not necessarily generate a change accompanied by phase transition in the heat-source-side heat exchanger 513 and the usage-side heat exchanger 515.

### (2-1) Cooling Operation

In a case where the refrigerant cycle apparatuses 51a, ... perform cooling operations, the refrigerant circulates in the direction of an arrow C in FIG. 2. In this case, the heat-source-side heat exchanger 513 and the usage-side heat exchanger 515 function as a radiator and a heat absorber, respectively.

During a cooling operation, high-pressure gas refrigerant discharged from the compressor 511 reaches the heat-source-side heat exchanger 513 via the four-way switching valve 512. In the heat-source-side heat exchanger 513, the high-pressure gas refrigerant is made to exchange heat with air (outside air) to be condensed, and changes to high-pressure liquid refrigerant. Then the high-pressure liquid refrigerant is decompressed when passing through the expansion mechanism 514, and changes to low-pressure gas-liquid-two-phase refrigerant. Then in the usage-side heat exchanger 515, the low-pressure gas-liquid-two-phase refrigerant is made to exchange heat with the air in the air-conditioning target space of the property 10 to be evaporated, and changes to low-pressure gas refrigerant. Thus, the temperature of the air in the air-conditioning target space of the property 10 decreases. Then the low-pressure gas refrigerant reaches the compressor 511 via the four-way switching valve 512. Then the compressor 511 sucks the low-pressure gas refrigerant.

### (2-2) Heating Operation

In a case where the refrigerant cycle apparatuses 51a, ... perform heating operations, the refrigerant circulates in the direction of an arrow H in FIG. 2. In this case, the heat-source-side heat exchanger 513 and the usage-side heat exchanger 515 function as a heat absorber and a radiator, respectively.

During a heating operation, high-pressure gas refrigerant discharged from the compressor 511 reaches the usage-side heat exchanger 515 via the four-way switching valve 512. In the usage-side heat exchanger 515, the high-pressure gas refrigerant is made to exchange heat with air in the air-conditioning target space of the property 10 to be condensed, and changes to high-pressure liquid refrigerant. Thus, the temperature of the air in the air-conditioning target space of the property 10 increases. Then the high-pressure liquid refrigerant is decompressed when passing through the expansion mechanism 514, and changes to low-pressure gas-liquid-two-phase refrigerant. Then in the heat-source-side heat exchanger 513, the low-pressure gas-liquid-two-phase refrigerant is made to exchange heat with air (outside air) to be evaporated, and changes to low-pressure gas refrigerant. Then the low-pressure gas refrigerant reaches the compressor 511 via the four-way switching valve 512. Then the compressor 511 sucks the low-pressure gas refrigerant.

### (3) Action of Operation Control System 100

The operation control system 100 performs control related to the execution of normal operations and special operations of the refrigerant cycle apparatuses 51a, ... on the basis of a request from the outside related to an electric-power supply demand adjustment. The normal operations are cooling operations and heating operations of the refrigerant cycle apparatuses 51a, ..., and are operations for adjusting at least one of the temperature or the moisture of the air-conditioning target space of each property 10. The special operations are operations executed at predetermined timings to suppress a decrease in the capacities of the normal operations of the refrigerant cycle apparatuses 51a, .... The special operation includes at least a heating-time oil return operation, and may further include at least one of a cooling-time oil return operation and a defrosting operation. The cooling-time oil return operation is an oil return operation during cooling operations of the refrigerant cycle apparatuses 51a, ... The heating-time oil return operation is an oil return operation during heating operations of the refrigerant cycle apparatuses 51a, ... The defrosting operation is an operation performed during the heating operations of the refrigerant cycle apparatuses 51a, ...

The oil return operation (the cooling-time oil return operation and the heating-time oil return operation) is an operation for forcibly returning, to the compressor 511, refrigerating-machine oil that has flowed out from the compressor 511 during normal operations of the refrigerant cycle apparatuses 51a, ... and has stayed in the refrigerant circuit 510 except the compressor 511. When the refrigerating-machine oil stored in the compressor 511 is insufficient, the sliding portions of the compressor 511 may be insufficiently lubricated, and the compression efficiency may decrease. As a result, the operation capacities of the refrigerant cycle apparatuses 51a, ... may decrease. To this end, the oil return operation is performed to suppress the decrease in the operation capacities of the refrigerant cycle apparatuses 51a, ...

The defrosting operation is an operation for removing frost that generated on the heat-source-side heat exchanger 513 during heating operations of the refrigerant cycle apparatuses 51a, ... In a case where the humidity of the outside air is high, frost tends to adhere to the heat exchange portion of the heat-source-side heat exchanger 513. When the surface of the heat exchange portion of the heat-source-side heat exchanger 513 is covered with frost, the heat exchange capacity of the heat-source-side heat exchanger 513 may decrease, and the operation capacities of the refrigerant cycle apparatuses 51a, ... may decrease. To this end, the defrosting operation is performed to suppress the decrease in the operation capacities of the refrigerant cycle apparatuses 51a, ...

The management server 50 controls the refrigerant cycle apparatuses 51a, ... so that the special operations of the refrigerant cycle apparatuses 51a, ... are executed at a predetermined timing. Next, a start condition, action, an end condition, and a consumed-electric-power trend of each special operation will be described.

### (3-1) Cooling-Time Oil Return Operation

### (3-1-1) Start Condition

The management server 50 starts a cooling-time oil return operation in a case where any one of the following condition A1 and condition B1 is satisfied.
· Condition A1: The integrated values of times during which normal operations of the refrigerant cycle apparatuses 51a, ... have been executed after the end time points of the previous special operations become equal to or more than a predetermined threshold.
· Condition B1: The oil rise amounts of the compressors 511 after the end time points of the previous special operations become equal to or more than a predetermined threshold.

The oil rise amounts are amounts of refrigerating-machine oil that has flowed out from the compressors 511 during normal operations of the refrigerant cycle apparatuses 51a, ... The oil rise amount is calculated on the basis of, for example, the number of revolutions of the compressor 511 during a normal operation and an integrated value of a time during which a normal operation has been executed.

The "end time point of the previous special operation" is a time point at which any one of the end of a cooling-time oil return operation, the end of a heating-time oil return operation, and the end of a defrosting operation is fulfilled.

### (3-1-2) Action

The management server 50 executes a cooling-time oil return operation by temporarily increasing the number of revolutions of the compressor 511 and the opening degree of the expansion mechanism 514 while the cooling operation is continued. Thus, the amount of refrigerant flowing through the usage-side heat exchanger 515 temporarily increases, and refrigerating-machine oil staying in the usage-side heat exchanger 515 moves to the compressor 511. The management server 50 may execute a plurality of cooling-time oil return operations at predetermined time intervals.

### (3-1-3) End Condition

The management server 50 ends a cooling-time oil return operation in a case where any one of the following condition C1 and condition D1 is satisfied.
· Condition C1: The time during which an oil return operation has been continuously executed becomes equal to or more than a predetermined threshold.
· Condition D1: A predetermined amount of refrigerating-machine oil has been returned to the compressor 511.

The amount of refrigerating-machine oil that has been returned to the compressor 511 is calculated on the basis of, for example, a detection value of the degree of superheating of low-pressure gas refrigerant sucked into the compressor 511. Since during a cooling-time oil return operation, the amount of refrigerant flowing through the usage-side heat exchanger 515 temporarily increases, the degree of wetness of the refrigerant flowing through the usage-side heat exchanger 515 becomes larger, and the degree of superheating of the refrigerant flowing through the usage-side heat exchanger 515 becomes smaller.

### (3-1-4) Consumed-Electric-Power Trend

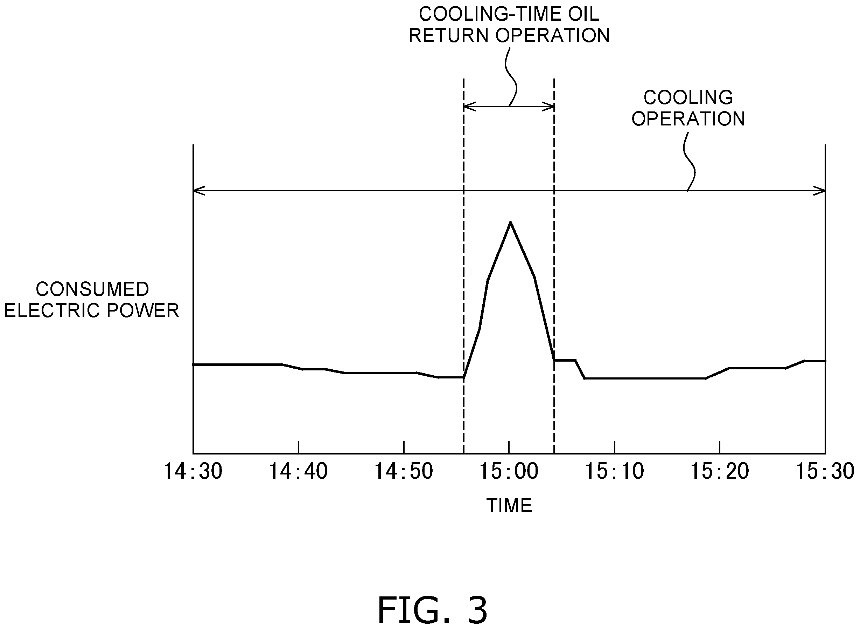

Since during a cooling-time oil return operation, the number of revolutions of the compressor 511 temporarily increases, as shown in FIG. 3, the electric power consumed by the refrigerant cycle apparatuses 51a, ... temporarily increases. Since a cooling operation is continuously executed during a cooling-time oil return operation, the difference between the consumed electric power before the cooling-time oil return operation and the consumed electric power after the cooling-time oil return operation is small.

### (3-2) Heating-Time Oil Return Operation

### (3-2-1) Start Condition

The management server 50 starts a heating-time oil return operation in a case where any one of the following condition A2 and condition B2 is satisfied.
· Condition A2: The integrated values of times during which normal operations of the refrigerant cycle apparatuses 51a, ... have been executed after the end time points of the previous special operations become equal to or more than a predetermined threshold.
· Condition B2: The oil rise amounts of the compressors 511 after the end time points of the previous special operations become equal to or more than a predetermined threshold.

### (3-2-2) Action

The management server 50 executes a heating-time oil return operation by controlling the four-way switching valve 512 to switch the refrigerant circuit 510 to a circuit at a time of a cooling operation, and temporarily increasing the opening degree of the expansion mechanism 514. Thus, refrigerating-machine oil staying in the usage-side heat exchanger 515 moves to the compressor 511. The management server 50 may execute a plurality of heating-time oil return operations at predetermined time intervals.

### (3-2-3) End Condition

The management server 50 ends a heating-time oil return operation in a case where an oil return end condition and a defrosting end condition to be described later are both fulfilled. The oil return end condition is fulfilled in a case where any one of the following condition C2 and condition D2 is satisfied.
· Condition C2: The time during which an oil return operation has been continuously executed becomes equal to or more than a predetermined threshold.
· Condition D2: A predetermined amount of refrigerating-machine oil has been returned to the compressor 511.

The amount of refrigerating-machine oil that has been returned to the compressor 511 is calculated on the basis of, for example, the amount of refrigerant circulating through the refrigerant circuit 510.

### (3-2-4) Consumed-Electric-Power Trend

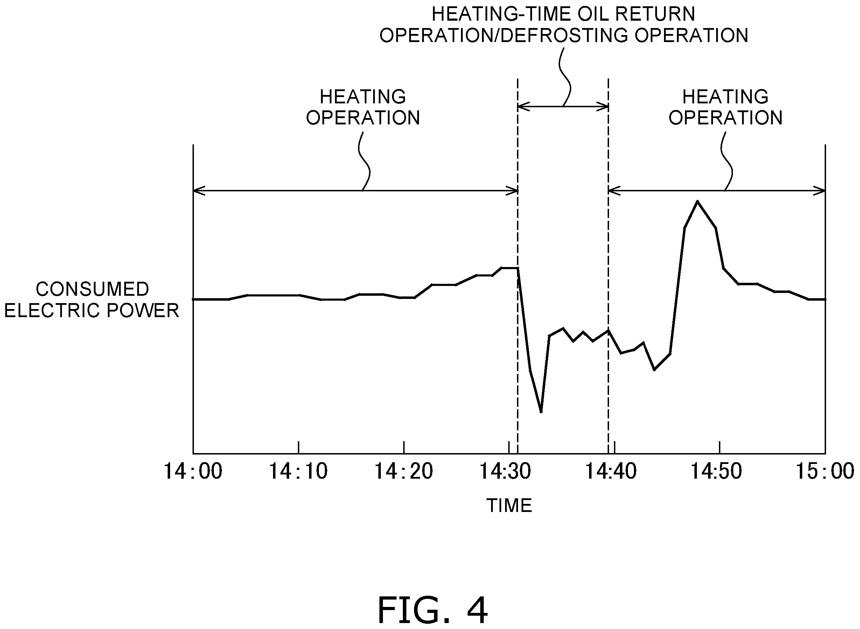

During a heating-time oil return operation, heating operations of the refrigerant cycle apparatuses 51a, ... are temporarily stopped. Further, the number of revolutions of the compressor 511 during a heating-time oil return operation can be made lower than the number of revolutions of the compressor 511 during a heating operation. Therefore, the number of revolutions of the compressor 511 temporarily diminishes during a heating-time oil return operation. Therefore, as shown in FIG. 4, during a heating-time oil return operation, the electric power consumed by the refrigerant cycle apparatuses 51a, ... temporarily diminishes.

Since during a heating-time oil return operation, heating operations of the refrigerant cycle apparatuses 51a, ... are temporarily stopped, the temperature of air in the air-conditioning target space of the property 10 decreases. Therefore, in a case where as shown in FIG. 4, a heating operation is restarted after the end of a heating-time oil return operation, the electric power consumed by the refrigerant cycle apparatuses 51a, ... temporarily increases.

### (3-3) Defrosting Operation

### (3-3-1) Start Condition

The management server 50 starts a defrosting operation in a case where any one of the following condition A3, condition B3, and condition C3 is satisfied.
· Condition A3: The integrated values of times during which normal operations of the refrigerant cycle apparatuses 51a, ... have been executed after the end time points of the previous special operations become equal to or more than a predetermined threshold.
· Condition B3: The heat exchange capacities of the heat-source-side heat exchangers 513 have decreased by a predetermined threshold or more.
· Condition C3: Elapsed times from the end time points of the previous heating-time oil return operations become equal to or more than a predetermined threshold.

### (3-3-2) Action

The action of a defrosting operation is the same as the action of a heating-time oil return operation.

### (3-3-3) End Condition

The management server 50 ends a defrosting operation in a case where the oil return end condition described above and a defrosting end condition are both fulfilled. The defrosting end condition is fulfilled in a case where any one of the following condition D3 and condition E3 is satisfied.
· Condition D3: The time during which a defrosting operation has been continuously executed becomes equal to or more than a predetermined threshold.
· Condition E3: It has been confirmed that no frost has adhered to the heat exchange portion of the heat-source-side heat exchanger 513.

Whether or not frost has adhered to the heat-source-side heat exchanger 513 may be ascertained on the basis of, for example, a detection value of the temperature of the heat exchange portion of the heat-source-side heat exchanger 513. The heat exchange portion is, for example, a fin.

### (3-3-4) Consumed-Electric-Power Trend

As shown in FIG. 4, the consumed-electric-power trend of a defrosting operation is the same as the consumed-electric-power trend of a heating-time oil return operation.

### (4) Action of Management Server 50

As shown in FIG. 1, the management server 50 mainly includes a storage unit 71, a determination unit 72, a communication unit 73, and a control unit 74.

The storage unit 71 stores electric-power supply demand adjustment request information related to electric-power supply demand adjustment requests to the properties 10. The electric-power supply demand adjustment requests are requests from the outside related to electric-power supply demand adjustments with a trend toward suppressing or promoting electric-power consumption of the refrigerant cycle apparatuses 51a, ... installed in the properties 10.

On the basis of the electric-power supply demand adjustment request information stored in the storage unit 71, the determination unit 72 determines special-operation timings at which special operations of the refrigerant cycle apparatuses 51a, ... installed in the properties 10 are to be executed.

The communication unit 73 communicates with the centralized controller 40 of each property 10 via the public line 105, such as the Internet.

On the basis of the special-operation timings determined by the determination unit 72, the control unit 74 transmits a control signal for executing a special operation of each of the refrigerant cycle apparatuses 51a, ..., to the centralized controller 40 of each property 10 via the communication unit 73. The control unit 74 acquires information related to the operation of each of the refrigerant cycle apparatuses 51a, ... from the centralized controller 40 of each property 10 via the communication unit 73.

In the present embodiment, the electric-power supply demand adjustment request information includes a negawatt request time period that includes at least one time period that is a target of an electric-power supply demand adjustment request with a trend toward suppressing the electric-power consumption of the refrigerant cycle apparatuses 51a, ... In this case, the determination unit 72 determines a timing that satisfies at least one of the following first condition and second condition, as the special-operation timing.
· First condition: A cooling-time oil return operation is avoided in a negawatt request time period. In other words, no cooling-time oil return operation is executed in a negawatt request time period.
· Second condition: At least one of a heating-time oil return operation and a defrosting operation is executed in a negawatt request time period.

In a negawatt request time period, there is a possibility that predicted values of the electric power to be consumed by the refrigerant cycle apparatuses 51a, ... are equal to or more than aim values of the electric power to be consumed by the refrigerant cycle apparatuses 51a, ... In other words, the negawatt request time period is a time period in which a request is made to cut down the electric-power consumption since there is a possibility that the electric-power supply becomes insufficient. Therefore, in a case where special operations are executed in a negawatt request time period, it is preferable that the electric power consumed by the refrigerant cycle apparatuses 51a, ... is not increased by executing the special operations.

As shown in FIG. 3, while a cooling-time oil return operation is executed, the electric power consumed by the refrigerant cycle apparatuses 51a, ... temporarily increases. Therefore, it is preferable not to execute a cooling-time oil return operation in a negawatt request time period (first condition).

As shown in FIG. 4, while a heating-time oil return operation or a defrosting operation is executed, the electric power consumed by the refrigerant cycle apparatuses 51a, ... temporarily diminishes. Therefore, it is preferable to execute at least one of a heating-time oil return operation and a defrosting operation in a negawatt request time period (second condition).

In the present embodiment, the determination unit 72 determines a special-operation timing in such a manner that at least one of the first condition and the second condition described above is satisfied, and thus can suppress an increase in the consumed electric power in a negawatt request time period.

### (5) Features

On the basis of an electric-power supply demand adjustment request from the outside, the operation control system 100 determines timings at which special operations of the refrigerant cycle apparatuses 51a, ... are to be executed, to suppress a decrease in the efficiency of demand response control.

On the basis of a negawatt request time period that is a target of an electric-power supply demand adjustment request with a trend toward suppressing the electric-power consumption of the refrigerant cycle apparatuses 51a, ..., the operation control system 100 according to the present embodiment determines timings at which special operations are to be executed, to suppress a decrease in the efficiency of demand response control.

### -Second Embodiment-

The basic configuration and action of an operation control system 100 according to the present embodiment are the same as the basic configuration and action of the first embodiment. Hereinafter, differences from the first embodiment will be mainly described.

In the present embodiment, electric-power supply demand adjustment request information includes a posiwatt request time period that includes at least one time period that is a target of an electric-power supply demand adjustment request with a trend toward promoting the electric-power consumption of refrigerant cycle apparatuses 51a, ... In this case, a determination unit 72 determines a timing that satisfies at least one of the following third to fifth conditions, as a special-operation timing.
· Third condition: A cooling-time oil return operation is executed in a posiwatt request time period.
· Fourth condition: At least one of a heating-time oil return operation and a defrosting operation is avoided in a posiwatt request time period. In other words, at least one of a heating-time oil return operation and a defrosting operation is not executed in a posiwatt request time period.
· Fifth condition: At least one of a heating-time oil return operation and a defrosting operation is executed in a time period immediately before a posiwatt request time period.

In a posiwatt request time period, there is a possibility that predicted values of the electric power to be consumed by the refrigerant cycle apparatuses 51a, ... are less than aim values of the electric power to be consumed by the refrigerant cycle apparatuses 51a, ... In other words, the posiwatt request time period is a time period in which a request is made to promote the electric-power consumption since there is a possibility that the electric-power supply becomes excessive. Therefore, in a case where a special operation is executed in a posiwatt request time period, it is preferable that the electric power consumed by the refrigerant cycle apparatuses 51a, ... is increased by executing the special operation.

As shown in FIG. 3, while a cooling-time oil return operation is executed, the electric power consumed by the refrigerant cycle apparatuses 51a, ... temporarily increases. Therefore, it is preferable to execute a cooling-time oil return operation in a posiwatt request time period (third condition).

As shown in FIG. 4, while a heating-time oil return operation or a defrosting operation is executed, the electric power consumed by the refrigerant cycle apparatuses 51a, ... temporarily diminishes. Therefore, it is preferable not to execute at least one of a heating-time oil return operation and a defrosting operation in a posiwatt request time period (fourth condition).

In a case where as shown in FIG. 4, a heating operation is restarted after the end of a heating-time oil return operation, the electric power consumed by the refrigerant cycle apparatuses 51a, ... temporarily increases. Therefore, it is preferable to execute at least one of a heating-time oil return operation and a defrosting operation in a time period immediately before a posiwatt request time period (fifth condition).

In the present embodiment, the determination unit 72 determines a special-operation timing in such a manner that at least one of the third to fifth conditions described above is satisfied, and thus can promote an increase in the consumed electric power in a posiwatt request time period.

On the basis of a posiwatt request time period that is a target of an electric-power supply demand adjustment request with a trend toward promoting the electric-power consumption of the refrigerant cycle apparatuses 51a, ..., the operation control system 100 according to the present embodiment determines timings at which special operations are to be executed, to suppress a decrease in the efficiency of demand response control.

### -Modifications-

### (1) Modification A

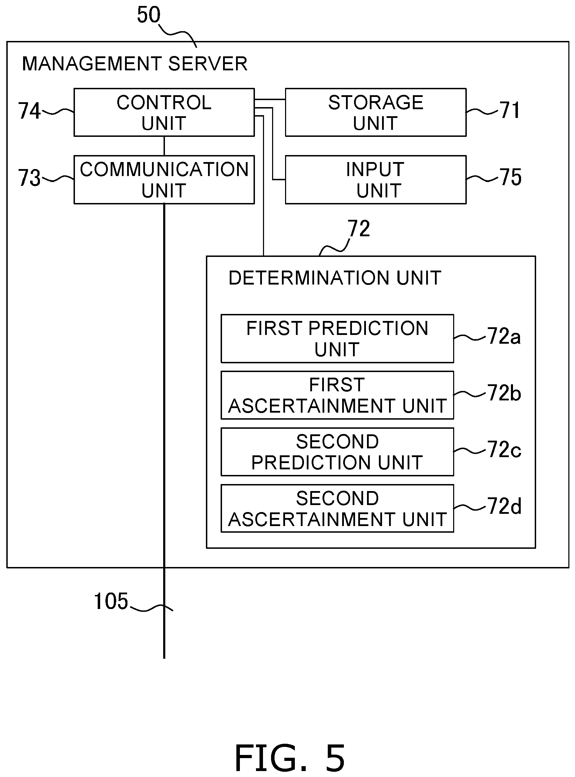

In the present modification, as shown in FIG. 5, the determination unit 72 includes a first prediction unit 72a and a first ascertainment unit 72b.

On the basis of operation data on the refrigerant cycle apparatuses 51a, ..., the first prediction unit 72a predicts timings at which special operations are to be executed. The operation data is data related to normal operations and special operations executed by the refrigerant cycle apparatuses 51a, ... in the past.

The operation data is, for example, parameters used in the above-described start condition of the special operations. Specifically, in a case where special operations that are prediction targets of the first prediction unit 72a are a cooling-time oil return operation or a heating-time oil return operation, the operation data includes (a) the integrated values of times during which normal operations of the refrigerant cycle apparatuses 51a, ... have been executed after the end time points of the previous special operations, and (b) the oil rise amounts of the compressors 511 after the end time points of the previous special operations. In a case where special operations that are prediction targets of the first prediction unit 72a are a defrosting operation, the operation data includes (c) the integrated values of times during which normal operations of the refrigerant cycle apparatuses 51a, ... have been executed after the end time points of the previous special operations, (d) the heat exchange capacities of the heat-source-side heat exchangers 513, and (e) elapsed times from the end time points of the previous heating-time oil return operations.

The first ascertainment unit 72b ascertains whether or not special operations can be executed in a request target time period that includes at least one time period that is a target of an electric-power supply demand adjustment request from the outside. The request target time period is a negawatt request time period and a posiwatt request time period.

The first ascertainment unit 72b ascertains whether or not timings (predicted timings) predicted by the first prediction unit 72a at which special operations are to be executed can be shifted to the request target time period (can be executed). In a case where the request target time period is a negawatt request time period, the first ascertainment unit 72b ascertains whether or not predicted timings of at least one of a heating-time oil return operation and a defrosting operation can be shifted to the request target time period. In a case where the request target time period is a posiwatt request time period, the first ascertainment unit 72b ascertains whether or not predicted timings of cooling-time oil return operations can be shifted to the request target time period.

Further, the first ascertainment unit 72b ascertains whether or not the predicted timings of the special operations can be shifted to a time period except the request target time period. In a case where the request target time period is a negawatt request time period, the first ascertainment unit 72b ascertains whether or not predicted timings of cooling-time oil return operations can be shifted to a time period except the request target time period. In a case where the request target time period is a posiwatt request time period, the first ascertainment unit 72b ascertains whether or not predicted timings of at least one of a heating-time oil return operation and a defrosting operation can be shifted to a time period except the request target time period.

On the basis of the prediction results of the first prediction unit 72a and the ascertainment results of the first ascertainment unit 72b, the determination unit 72 determines special-operation timings.

On the basis of the prediction results of timings at which special operations are to be executed, in addition to an electric-power supply demand adjustment request from the outside, the operation control system 100 according to the present modification determines timings at which the special operations are to be executed, to suppress a decrease in the efficiency of demand response control.

In the present modification, as shown in FIG. 5, the management server 50 may further include an input unit 75 for inputting prediction information used for predicting the timings at which special operations are to be executed. The prediction information is input to the management server 50 by an administrator or the like of the operation control system 100. The prediction information is, for example, information related to the current season, consumed-electric-power aim values of the refrigerant cycle apparatuses 51a, ..., information related to event occurrence situations in the properties 10, and an upper limit value and a lower limit value of a time interval between times during which a special operation is executed.

### (2) Modification B

As shown in FIG. 5, in the present modification, the determination unit 72 further includes a second prediction unit 72c in Modification A.

The second prediction unit 72c predicts an increase and a diminishment in the electric power to be consumed by the refrigerant cycle apparatuses 51a, ... due to the special operations. On the basis of, for example, operation data (the parameters (a) to (e) described above) used by the first prediction unit 72a, the second prediction unit 72c predicts a future trend of the consumed electric power in a case where the refrigerant cycle apparatuses 51a, ... execute special operations.

On the basis of, in addition, the prediction results of the second prediction unit 72c, the determination unit 72 determines special-operation timings. In a case where the second prediction unit 72c predicts a diminishment in the consumed electric power, the determination unit 72 determines a special-operation timing such that the timing at which the special operation is to be executed is included in a negawatt request time period. In a case where the second prediction unit 72c predicts an increase in the consumed electric power, the determination unit 72 determines a special-operation timing such that the timing at which the special operation is to be executed is included in a posiwatt request time period.

On the basis of the prediction results of electric power to be consumed by special operations, in addition to an electric-power supply demand adjustment request from the outside, the operation control system 100 according to the present modification determines timings at which the special operations are to be executed, to suppress a decrease in the efficiency of demand response control.

### (3) Modification C

In the present modification, electric-power supply demand adjustment request information includes a consumed-electric-power aim value at a predetermined time. The management server 50 further includes a second ascertainment unit 72d. Specifically, as shown in FIG. 5, the determination unit 72 further includes the second ascertainment unit 72d. The determination unit 72 determines special-operation timings on the basis of ascertainment results of the second ascertainment unit 72d.

The second ascertainment unit 72d compares the consumed-electric-power aim values of the refrigerant cycle apparatuses 51a, ... and the predicted consumed-electric-power values of the refrigerant cycle apparatuses 51a, ... to ascertain whether an electric-power supply demand adjustment request is a request with a trend toward suppressing the electric-power consumption or a request with a trend toward promoting the electric-power consumption. The consumed-electric-power aim values are input to the management server 50 by, for example, an administrator or the like of the operation control system 100. The predicted consumed-electric-power values are calculated by the management server 50 on the basis of operation data on the refrigerant cycle apparatuses 51a, ...

The operation control system 100 according to the present modification ascertains whether an electric-power supply demand adjustment request is a request with a trend toward suppressing the electric-power consumption or a request with a trend toward promoting the electric-power consumption. On the basis of the ascertained electric-power supply demand adjustment request, the operation control system 100 determines timings at which special operations are to be executed, to suppress a decrease in the efficiency of demand response control.

### (4) Modification D

In the present modification, the storage unit 71 further stores peak information including at least one peak time at which a peak occurs in a trend related to the total electric power of the properties 10. On the basis of, in addition, the peak information, the determination unit 72 determines special-operation timings.

In the present modification, for example, the control unit 74 selects a total-electric-power demand value having the predetermined number of peaks, from all the total-electric-power demand values of the properties 10 in one day. The total-electric-power demand value is an average value of the electric power consumed by the properties 10 in a predetermined time period. For example, in a case where one day is divided into time periods of each 30 minutes, the total-electric-power demand value is an average value of the electric power consumed by the properties 10 in each time period. The number of peaks is the number of peak times included in the peak information. The control unit 74 includes a time period corresponding to the selected total-electric-power demand value, in the peak information as the peak times. The storage unit 71 stores the peak information created by the control unit 74.

On the basis of at least the peak information stored in the storage unit 71, the determination unit 72 determines special-operation timings. For example, the determination unit 72 determines timings at which cooling-time oil return operations are to be executed, in such a manner that the peak times included in the peak information are avoided. The determination unit 72 determines timings at which at least one of a heating-time oil return operation and a defrosting operation is to be executed, so that the at least one of the heating-time oil return operation and the defrosting operation is executed at the peak times included in the peak information.

On the basis of the peak information, the operation control system 100 according to the present modification determines timings at which special operations are to be executed, to suppress a decrease in the efficiency of demand response control.

### (5) Modification E

In the present modification, the storage unit 71 includes electric-power market price information related to an electric-power market price. On the basis of the electric-power market price information, the determination unit 72 determines special-operation timings. The electric-power market price is, for example, an electric-power price (spot price) determined in an electric-power spot market that is an electric-power exchange market held by a wholesale electric-power exchange. In the electric-power spot market, for example, the exchange is performed in a unit of 30 minutes per period, and the electric-power price varies according to the electric-power demand, time periods, and the seasons. The electric-power market price information may be information related to a future usage-based unit price, such as a spot price, or may be information related to a usage-based unit price calculated on the basis of a spot price.

The determination unit 72 determines special-operation timings by regarding a time period in which an electric-power market price included in electric-power market price information is equal to or more than a first threshold, as at least one time period that is a target of an electric-power supply demand adjustment request with a trend toward suppressing the electric-power consumption. The determination unit 72 determines special-operation timings by regarding a time period in which an electric-power market price included in electric-power market price information is equal to or less than a second threshold, as at least one time period that is a target of an electric-power supply demand adjustment request with a trend toward promoting the electric-power consumption.

On the basis of the electric-power market price, the operation control system 100 according to the present modification determines timings at which special operations are to be executed, to suppress a decrease in the efficiency of demand response control, and reduce the electric-power rate.

The determination unit 72 may determine special-operation timings on the basis of both the electric-power supply demand adjustment request information and the electric-power market price information. The determination unit 72 may determine special-operation timings on the basis of at least one of the electric-power supply demand adjustment request information and the electric-power market price information, and the peak information.

### (6) Modification F

In the embodiment, the operation control system 100 is a system that controls the operations of the refrigerant cycle apparatuses 51a, ... installed in the at least one property 10. However, the operation control system 100 may be a system that controls the operations of the refrigerant cycle apparatuses 51a, ... installed in at least one area. The area is a region where the refrigerant cycle apparatuses 51a, ... that are control targets are installed. For example, the area is a predetermined region including at least one property 10.

### (7) Modification G

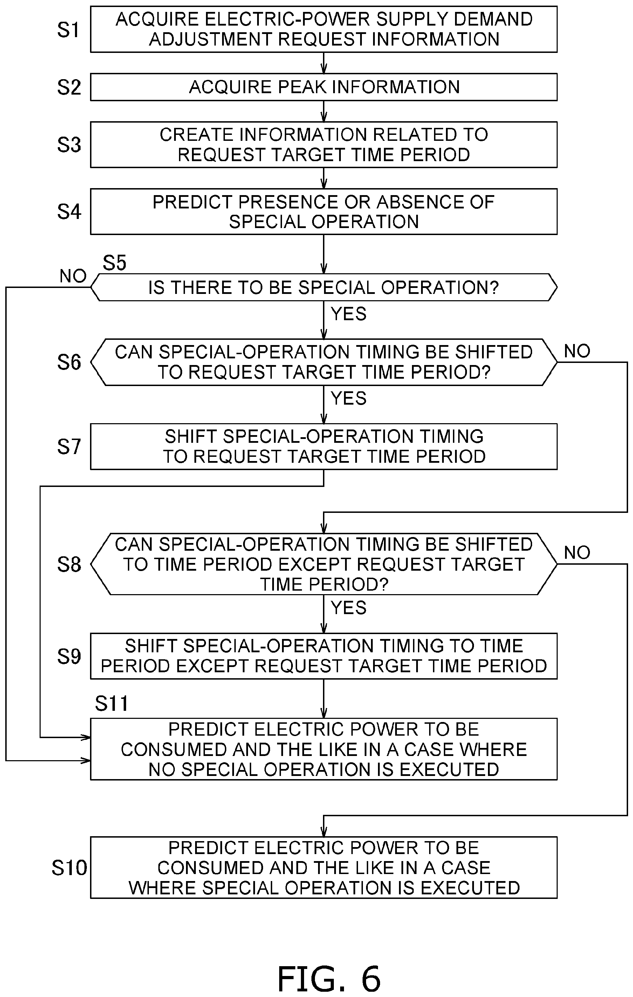

A specific example of a method in which the operation control system 100 determines special-operation timings will be described with reference to a flowchart of FIG. 6. In FIG. 6, the management server 50 determines special-operation timings of the refrigerant cycle apparatuses 51a, ... on the basis of electric-power supply demand adjustment request information and peak information. However, the management server 50 may determine special-operation timings of the refrigerant cycle apparatuses 51a, ... on the basis of only electric-power supply demand adjustment request information. In that case, step S2 in FIG. 6 is not executed.

In step S1, the management server 50 acquires electric-power supply demand adjustment request information from the outside. Specifically, the management server 50 acquires the electric-power supply demand adjustment request information on the basis of information stored in advance in the management server 50 and information input to the management server 50. The electric-power supply demand adjustment request information includes a time period in which there is an electric-power supply demand adjustment request from the outside. The management server 50 stores the acquired electric-power supply demand adjustment request information in the storage unit 71.

In step S2, the management server 50 acquires the peak information described in Modification D, if necessary. The peak information includes at least one peak time. The management server 50 stores the acquired peak information in the storage unit 71.

In step S3, the management server 50 creates information related to a request target time period in which special operations can be executed. On the basis of the electric-power supply demand adjustment request information acquired in step S1, the management server 50 creates the information related to the request target time period. In a case where the peak information is acquired in step S2, the management server 50 puts together the electric-power supply demand adjustment request information acquired in step S1 and the peak information acquired in step S2 to create the information related to the request target time period. The request target time period is a negawatt request time period or a posiwatt request time period.

In step S4, on the basis of operation data on the refrigerant cycle apparatuses 51a, ..., the management server 50 predicts the presence or absence of a special operation that needs to be executed.

In step S5, the management server 50 ascertains whether or not there is to be the special operation predicted in step S4. In a case where there is to be the special operation predicted in step S4, in steps S6 to S10, the management server 50 determines a time period (special-operation timing) in which the special operation is to be executed. In a case where there is no special operation predicted in step S4, in step S11, the management server 50 executes demand response control in a case where no special operation is executed. In step S11, the electric power to be consumed by the refrigerant cycle apparatuses 51a, ..., and the adjustment amounts of the electric power to be used by the refrigerant cycle apparatuses 51a, ... in a case where no special operation is executed are predicted.

In step S6, according to the type of the special operation, the management server 50 ascertains whether or not the special-operation timing can be shifted to the request target time period (can be executed).

In a case where in step S6, the special-operation timing can be shifted, in step S7, the management server 50 shifts the special-operation timing to the request target time period and determines the special-operation timing. Then the process makes a transition to step S11.

In a case where in step S6, the special-operation timing cannot be shifted, in step S8, according to the type of the special operation, the management server 50 ascertains whether or not the special-operation timing can be shifted to a time period except the request target time period. The time period except the request target time period is, for example, a time period immediately before the request target time period.

In a case where in step S8, the special-operation timing can be shifted, in step S9, the management server 50 shifts the special-operation timing to a time period except the request target time period and determines the special-operation timing. Then the process makes a transition to step S11.

In a case where in step S8, the special operation timing cannot be shifted, in step S10, the management server 50 executes demand response control in a case where a special operation is executed. In step S10, the electric power to be consumed by the refrigerant cycle apparatuses 51a, ..., and the adjustment amounts of the electric power to be used by the refrigerant cycle apparatuses 51a, ... in a case where a special operation is executed are predicted.

### REFERENCE SIGNS LIST

- 71:: storage unit
- 72:: determination unit
- 72a:: first prediction unit
- 72b:: first ascertainment unit
- 72c:: second prediction unit
- 72d:: second ascertainment unit
- 100:: operation control system

### CITATION LIST

### PATENT LITERATURE

[Patent Document 1] Japanese Unexamined Patent Application Publication No. 2001-197661

## Claims

1. An operation control system (100) comprising:
a storage unit (71) configured to store electric-power information; and
a determination unit (72) configured to determine, on a basis of the electric-power information, a special-operation timing at which a special operation of a refrigerant cycle apparatus installed in at least one property or at least one area is to be executed,
wherein:
the electric-power information includes electric-power supply demand adjustment request information related to an electric-power supply demand adjustment request from an outside to the property or the area; and
the electric-power supply demand adjustment request information includes at least one of
a negawatt request time period that includes at least one time period that is a target of the electric-power supply demand adjustment request with a trend toward suppressing electric-power consumption, and
a posiwatt request time period that includes at least one time period that is a target of the electric-power supply demand adjustment request with a trend toward promoting electric-power consumption,
**characterized in that**:
the special operation includes
a heating-time oil return operation that is an oil return operation during a heating operation of the refrigerant cycle apparatus; and
the determination unit (72) is configured to determine at least one of
the special-operation timing at which the heating-time oil return operation is to be executed in the negawatt request time period, and
the special-operation timing at which the heating-time oil return operation is to be avoided in the posiwatt request time period.

2. The operation control system (100) according to claim 1, wherein:
the special operation further includes at least one of
a cooling-time oil return operation that is an oil return operation during a cooling operation of the refrigerant cycle apparatus, and
a defrosting operation during a heating operation of the refrigerant cycle apparatus; and
the determination unit (72) is further configured to determine at least one of
the special-operation timing at which the cooling-time oil return operation is to be avoided in the negawatt request time period, and
the special-operation timing at which the defrosting operation is to be executed in the negawatt request time period.

3. The operation control system (100) according to claim 1, wherein:
the special operation further includes at least one of
a cooling-time oil return operation that is an oil return operation during a cooling operation of the refrigerant cycle apparatus, and
a defrosting operation during a heating operation of the refrigerant cycle apparatus; and
the determination unit (72) is further configured to determine at least one of
the special-operation timing at which the cooling-time oil return operation is to be executed in the posiwatt request time period,
the special-operation timing at which the defrosting operation is to be avoided in the posiwatt request time period, and
the special-operation timing at which at least one of the heating-time oil return operation and the defrosting operation is to be executed in a time period immediately before the posiwatt request time period.

4. The operation control system (100) according to any one of claims 1 to 3, wherein
the determination unit (72) includes:
a first prediction unit (72a) configured to, on a basis of operation data on the refrigerant cycle apparatus, predict a timing at which the special operation is to be executed; and
a first ascertainment unit (72b) configured to ascertain whether or not the special operation can be executed in a request target time period that includes at least one time period that is a target of the electric-power supply demand adjustment request, and
the determination unit is configured to determine the special-operation timing on a basis of a prediction result of the first prediction unit and an ascertainment result of the first ascertainment unit.

5. The operation control system (100) according to claim 4, wherein
the first ascertainment unit (72b) is configured to ascertain whether or not a timing predicted by the first prediction unit (72a) at which the special operation is to be executed can be shifted to the request target time period.

6. The operation control system (100) according to claim 4 or 5, wherein
the determination unit (72) further includes
a second prediction unit (72c) configured to predict an increase and a diminishment in electric power to be consumed by the refrigerant cycle apparatus due to the special operation, and,
on a basis of, in addition, a prediction result of the second prediction unit, determine the special-operation timing.

7. The operation control system (100) according to claim 6, wherein
the determination unit (72) is configured to,
in a case where the second prediction unit (72c) predicts a diminishment in the electric power to be consumed, determine the special-operation timing so that the special-operation timing is to be included in at least one time period that is a target of the electric-power supply demand adjustment request with a trend toward suppressing electric-power consumption, and,
in a case where the second prediction unit predicts an increase in the electric power to be consumed, determine the special-operation timing so that the special-operation timing is to be included in at least one time period that is a target of the electric-power supply demand adjustment request with a trend toward promoting electric-power consumption.

8. The operation control system (100) according to any one of claims 1 to 7, wherein
the electric-power information includes the electric-power supply demand adjustment request information,
the electric-power supply demand adjustment request information includes a consumed-electric-power aim value at a predetermined time, and
the operation control system further comprises a second ascertainment unit (72d) configured to compare the consumed-electric-power aim value with a predicted consumed-electric-power value based on operation data on the refrigerant cycle apparatus to ascertain whether the electric-power supply demand adjustment request is a request with a trend toward suppressing electric-power consumption or a request with a trend toward promoting electric-power consumption.

9. The operation control system (100) according to any one of claims 1 to 8, wherein:
the electric-power information further includes peak information including at least one peak time that is a time at which a peak occurs in a trend related to total electric power of the property or the area, and
the determination unit (72) is configured to determine the special-operation timing on a basis of the electric-power supply demand adjustment request information and the peak information.

10. The operation control system (100) according to any one of claims 1 to 9, wherein
the electric-power information further includes an electric-power market price information related to an electric-power market price, and
the determination unit (72) is configured to
determine the special-operation timing by regarding a time period in which an electric-power market price included in the electric-power market price information is equal to or more than a first threshold, as at least one time period that is a target of the electric-power supply demand adjustment request with a trend toward suppressing electric-power consumption, and
determine the special-operation timing by regarding a time period in which an electric-power market price included in the electric-power market price information is equal to or less than a second threshold, as at least one time period that is a target of the electric-power supply demand adjustment request with a trend toward promoting electric-power consumption.

11. An operation control apparatus comprising:
a storage unit (71) configured to store electric-power information; and
a determination unit (72) configured to determine, on a basis of the electric-power information, a special-operation timing at which a special operation of a refrigerant cycle apparatus installed in at least one property or at least one area is to be executed,
wherein
the electric-power information includes electric-power supply demand adjustment request information related to an electric-power supply demand adjustment request from an outside to the property or the area, and
the electric-power supply demand adjustment request information includes at least one of
a negawatt request time period that includes at least one time period that is a target of the electric-power supply demand adjustment request with a trend toward suppressing electric-power consumption, and
a posiwatt request time period that includes at least one time period that is a target of the electric-power supply demand adjustment request with a trend toward promoting electric-power consumption,
**characterized in that**:
the special operation includes
a heating-time oil return operation that is an oil return operation during a heating operation of the refrigerant cycle apparatus; and
the determination unit (72) is configured to determine at least one of
the special-operation timing at which the heating-time oil return operation is to be executed in the negawatt request time period, and
the special-operation timing at which the heating-time oil return operation is to be avoided in the posiwatt request time period.

12. An operation control method comprising:
storing electric-power information; and
determining (S4-S9), on a basis of the electric-power information, a special-operation timing at which a special operation of a refrigerant cycle apparatus installed in at least one property or at least one area is to be executed,
wherein
the electric-power information includes electric-power supply demand adjustment request information related to an electric-power supply demand adjustment request from an outside to the property or the area, and
the electric-power supply demand adjustment request information includes at least one of
a negawatt request time period that includes at least one time period that is a target of the electric-power supply demand adjustment request with a trend toward suppressing electric-power consumption, and
a posiwatt request time period that includes at least one time period that is a target of the electric-power supply demand adjustment request with a trend toward promoting electric-power consumption,
**characterized in that**:
the special operation includes
a heating-time oil return operation that is an oil return operation during a heating operation of the refrigerant cycle apparatus; and
the determining the special-operation timing includes determining at least one of
the special-operation timing at which the heating-time oil return operation is to be executed in the negawatt request time period, and
the special-operation timing at which the heating-time oil return operation is to be avoided in the posiwatt request time period.

## Patentansprüche

1. Betriebssteuerungssystem (100), das aufweist:
eine Speichereinheit (71), die konfiguriert ist, von Strominformationen zu speichern; und
eine Bestimmungseinheit (72), die konfiguriert ist, auf der Grundlage der Strominformationen ein Sonderbetriebs-Timing zu bestimmen, zu dem ein Sonderbetrieb einer Kältemittelkreislaufvorrichtung, die in mindestens einem Grundstück oder mindestens einem Bereich installiert ist, ausgeführt werden soll,
wobei:
die Strominformationen Stromversorgungsbedarf-Anpassungsanforderungs-Informationen enthalten, die sich auf eine Stromversorgungsbedarf-Anpassungsanforderung von außerhalb an das Grundstück oder den Bereich beziehen; und
die Stromversorgungsbedarf-Anpassungsanforderungs-Informationen mindestens eines enthalten von:
einen Negawatt-Anforderungszeitraum, der mindestens einen Zeitraum umfasst, der ein Ziel der Stromversorgungsbedarf-Anpassungsanforderung mit einem Trend zur Unterdrückung des Stromverbrauchs ist, und
einen Posiwatt-Anforderungszeitraum, der mindestens einen Zeitraum umfasst, der ein Ziel der Stromversorgungsbedarf-Anpassungsanforderung mit einem Trend zur Förderung des Stromverbrauchs ist,
**dadurch gekennzeichnet, dass**
der Sonderbetrieb umfasst
einen Heizzeit-Ölrücklaufbetrieb, der ein Ölrücklaufbetrieb während eines Heizbetriebs der Kältemittelkreislaufvorrichtung ist; und
die Bestimmungseinheit (72) konfiguriert ist, mindestens eines zu bestimmen von:
das Sonderbetriebs-Timing, zu dem der Heizzeit-Ölrücklaufbetrieb in dem Negawatt-Anforderungszeitraum ausgeführt werden soll, und
das Sonderbetriebs-Timing, zu dem der Heizzeit-Ölrücklaufbetrieb in dem Posiwatt-Anforderungszeitraum vermieden werden soll.

2. Betriebssteuerungssystem (100) nach Anspruch 1, wobei:
der Sonderbetrieb ferner mindestens eines umfasst von:
einen Kühlzeit-Ölrücklaufbetrieb, der ein Ölrücklaufbetrieb während eines Kühlbetriebs der Kältemittelkreislaufvorrichtung ist, und
einen Abtaubetrieb während eines Heizbetriebs der Kältemittelkreislaufvorrichtung; und
die Bestimmungseinheit (72) ferner konfiguriert ist, mindestens eines zu bestimmen von:
das Sonderbetriebs-Timing, zu dem der Ölrücklaufbetrieb während der Kühlzeit im Negawatt-Anforderungszeitraum vermieden werden soll, und
das Sonderbetriebs-Timing, zu dem der Abtaubetrieb im Negawatt-Anforderungszeitraum ausgeführt werden soll.

3. Betriebssteuerungssystem (100) nach Anspruch 1, wobei:
der Sonderbetrieb ferner mindestens eines umfasst von:
einen Kühlzeit-Ölrücklaufbetrieb, der ein Ölrückführungsbetrieb während eines Kühlbetriebs der Kältemittelkreislaufvorrichtung ist, und
einen Abtaubetrieb während eines Heizbetriebs der Kältemittelkreislaufvorrichtung; und
die Bestimmungseinheit (72) ferner konfiguriert ist, mindestens eines zu bestimmen von:
das Sonderbetriebs-Timing, zu dem der Kühlzeit-Ölrücklaufbetrieb im Posiwatt-Anforderungszeitraum ausgeführt werden soll,
das Sonderbetriebs-Timing, zu dem der Abtaubetrieb im Posiwatt-Anforderungszeitraum zu vermeiden ist, und
das Sonderbetriebs-Timing, zu dem mindestens einer des Heizzeit-Ölrückführungsbetriebs und des Abtaubetriebs in einem Zeitraum unmittelbar vor dem Posiwatt-Anforderungszeitraum ausgeführt werden soll.

4. Betriebssteuerungssystem (100) nach einem der Ansprüche 1 bis 3, wobei
die Bestimmungseinheit (72) umfasst:
eine erste Vorhersageeinheit (72a), die konfiguriert ist, auf der Grundlage von Betriebsdaten der Kältemittelkreislaufvorrichtung ein Timing vorherzusagen, zu dem der Sonderbetrieb ausgeführt werden soll; und
eine erste Ermittlungseinheit (72b), die konfiguriert ist, zu ermitteln, ob der Sonderbetrieb in einem Anforderungszielzeitraum ausgeführt werden kann, der mindestens einen Zeitraum umfasst, der ein Ziel der Stromversorgungsbedarf-Anpassungsanforderung ist, und
die Bestimmungseinheit konfiguriert ist, das Sonderbetriebs-Timing auf der Grundlage eines Vorhersageergebnisses der ersten Vorhersageeinheit und eines Ermittlungsergebnisses der ersten Ermittlungseinheit zu bestimmen.

5. Betriebssteuerungssystem (100) nach Anspruch 4, wobei
die erste Ermittlungseinheit (72b) konfiguriert ist, zu ermitteln, ob ein von der ersten Vorhersageeinheit (72a) vorhergesagtes Timing, zu dem der Sonderbetrieb ausgeführt werden soll, auf den Anforderungszielzeitraum verschoben werden kann.

6. Betriebssteuerungssystem (100) nach Anspruch 4 oder 5, wobei
die Bestimmungseinheit (72) ferner umfasst:
eine zweite Vorhersageeinheit (72c), die konfiguriert ist, eine Zunahme und eine Verminderung des Stroms vorherzusagen, der von der Kältemittelkreislaufvorrichtung aufgrund des Sonderbetriebs verbraucht werden soll, und zusätzlich auf der Grundlage eines Vorhersageergebnisses der zweiten Vorhersageeinheit das Sonderbetriebs-Timing zu bestimmen.

7. Betriebssteuerungssystem (100) nach Anspruch 6, wobei
die Bestimmungseinheit (72) konfiguriert ist, um:
in einem Fall, in dem die zweite Vorhersageeinheit (72c) eine Verminderung des zu verbrauchenden Stroms vorhersagt, das Sonderbetriebs-Timing so zu bestimmen, dass das Sonderbetriebs-Timing in mindestens einen Zeitraum enthalten sein soll, der ein Ziel der Stromversorgungsbedarf-Anpassungsanforderung mit einem Trend zur Unterdrückung des Stromverbrauchs ist, und
in einem Fall, in dem die zweite Vorhersageeinheit eine Zunahme des zu verbrauchenden Stroms vorhersagt, das Sonderbetriebs-Timing so zu bestimmen, dass das Sonderbetriebs-Timing in mindestens einen Zeitraum enthalten sein soll, der ein Ziel der Stromversorgungsbedarf-Anpassungsanforderung mit einem Trend zur Förderung des Stromverbrauchs ist.

8. Betriebssteuerungssystem (100) nach einem der Ansprüche 1 bis 7, wobei
die Strominformationen die Stromversorgungsbedarf-Anpassungsanforderungs-Informationen enthalten,
die Stromversorgungsbedarf-Anpassungsanforderungs-Informationen einen Stromverbrauchszielwert zu einem vorbestimmten Zeitpunkt enthalten und das Betriebssteuerungssystem ferner eine zweite Ermittlungseinheit (72d) aufweist, die konfiguriert ist, den Stromverbrauchszielwert mit einem vorhergesagten Stromverbrauchswert auf der Grundlage von Betriebsdaten der Kältemittelkreislaufvorrichtung zu vergleichen, um zu ermitteln, ob die Stromversorgungsbedarf-Anpassungsanforderung eine Anforderung mit einem Trend zur Unterdrückung des Stromverbrauchs oder eine Anforderung mit einem Trend zur Förderung des Stromverbrauchs ist.

9. Betriebssteuerungssystem (100) nach einem der Ansprüche 1 bis 8, wobei:
die Strominformationen ferner Spitzeninformationen umfassen, die mindestens eine Spitzenzeit enthalten, bei der eine Spitze in einem Trend in Bezug auf den Gesamtstromverbrauch der Immobilie oder des Bereichs auftritt, und
die Bestimmungseinheit (72) konfiguriert ist, dass sie das Sonderbetriebs-Timing auf der Grundlage der Stromversorgungsbedarf-Anpassungsanforderung und der Spitzeninformationen zu bestimmen.

10. Betriebssteuerungssystem (100) nach einem der Ansprüche 1 bis 9, wobei
die Strominformationen ferner Strommarktpreisinformationen in Bezug auf einen Strommarktpreis enthalten, und
die Bestimmungseinheit (72) konfiguriert ist, um:
das Sonderbetriebs-Timing zu bestimmen, indem ein Zeitraum, in dem ein in den Strommarktpreisinformationen enthaltener Strommarktpreis gleich oder größer als ein erster Schwellenwert ist, als mindestens einen Zeitraum betrachtet wird, der ein Ziel der Stromversorgungsbedarf-Anpassungsanforderung mit einem Trend zur Unterdrückung des Stromverbrauchs ist, und
das Sonderbetriebs-Timing zu bestimmen, indem ein Zeitraum, in dem ein in den Strommarktpreisinformationen enthaltener Strommarktpreis gleich oder kleiner als ein zweiter Schwellenwert ist, als mindestens ein Zeitraum betrachtet wird, der ein Ziel der Stromversorgungsbedarf-Anpassungsanforderung mit einem Trend zur Förderung des Stromverbrauchs ist.

11. Betriebssteuerungsvorrichtung, das aufweist:
eine Speichereinheit (71), die konfiguriert ist, von Strominformationen zu speichern; und
eine Bestimmungseinheit (72), die konfiguriert ist, auf der Grundlage der Strominformationen ein Sonderbetriebs-Timing zu bestimmen, zu dem ein Sonderbetrieb einer Kältemittelkreislaufvorrichtung, die in mindestens einem Grundstück oder mindestens einem Bereich installiert ist, ausgeführt werden soll,
wobei
die Strominformationen Stromversorgungsbedarf-Anpassungsanforderungs-Informationen enthalten, die sich auf eine Stromversorgungsbedarf-Anpassungsanforderung von außerhalb an das Grundstück oder den Bereich beziehen, und
die Stromversorgungsbedarf-Anpassungsanforderungs-Informationen mindestens eines enthalten von:
einen Negawatt-Anforderungszeitraum, der mindestens einen Zeitraum umfasst, der ein Ziel der Stromversorgungsbedarf-Anpassungsanforderung mit einem Trend zur Unterdrückung des Stromverbrauchs ist, und
einen Posiwatt-Anforderungszeitraum, der mindestens einen Zeitraum umfasst, der ein Ziel der Stromversorgungsbedarf-Anpassungsanforderung mit einem Trend zur Förderung des Stromverbrauchs ist,
**dadurch gekennzeichnet, dass**
der Sonderbetrieb umfasst
einen Heizzeit-Ölrücklaufbetrieb, der ein Ölrücklaufbetrieb während eines Heizbetriebs der Kältemittelkreislaufvorrichtung ist; und
die Bestimmungseinheit (72) konfiguriert ist, mindestens eines zu bestimmen von:
das Sonderbetriebs-Timing, zu dem der Heizzeit-Ölrücklaufbetrieb in dem Negawatt-Anforderungszeitraum ausgeführt werden soll, und
das Sonderbetriebs-Timing, zu dem der Heizzeit-Ölrücklaufbetrieb in dem Posiwatt-Anforderungszeitraum vermieden werden soll.

12. Betriebssteuerungsverfahren, das aufweist:
Speichern von Strominformationen; und
Bestimmen (S4-S9) auf der Grundlage der Strominformationen eines Sonderbetriebs-Timings, zu dem ein Sonderbetrieb einer Kältemittelkreislaufvorrichtung, die in mindestens einem Grundstück oder mindestens einem Bereich installiert ist, ausgeführt werden soll,
wobei
die Strominformationen Stromversorgungsbedarf-Anpassungsanforderungs-Informationen enthalten, die sich auf eine Stromversorgungsbedarf-Anpassungsanforderung von außerhalb an das Grundstück oder den Bereich beziehen, und
die Stromversorgungsbedarf-Anpassungsanforderungs-Informationen mindestens eines enthalten von:
einen Negawatt-Anforderungszeitraum, der mindestens einen Zeitraum umfasst, der ein Ziel der Stromversorgungsbedarf-Anpassungsanforderung mit einem Trend zur Unterdrückung des Stromverbrauchs ist, und
einen Posiwatt-Anforderungszeitraum, der mindestens einen Zeitraum umfasst, der ein Ziel der Stromversorgungsbedarf-Anpassungsanforderung mit einem Trend zur Förderung des Stromverbrauchs ist,
**dadurch gekennzeichnet, dass**
der Sonderbetrieb umfasst:
einen Heizzeit-Ölrücklaufbetrieb, der ein Ölrücklaufbetrieb während eines Heizbetriebs der Kältemittelkreislaufvorrichtung ist; und
das Bestimmen des Sonderbetriebs-Timings das Bestimmen von mindestens einem umfasst von:
dem Sonderbetriebs-Timing, zu dem der Heizzeit-Ölrücklaufbetrieb in dem Negawatt-Anforderungszeitraum ausgeführt werden soll, und
dem Sonderbetriebs-Timing, zu dem der Heizzeit-Ölrücklaufbetrieb in dem Posiwatt-Anforderungszeitraum vermieden werden soll.

## Revendications

1. Système de commande de fonctionnement (100) comprenant :
une unité de stockage (71) configurée pour stocker des informations relatives à l'énergie électrique ; et
une unité de détermination (72) configurée pour déterminer, sur la base des informations relatives à l'énergie électrique, un moment d'opération spéciale auquel une opération spéciale d'un appareil à cycle frigorifique installé dans au moins une propriété ou au moins une zone doit être exécutée,
dans lequel :
les informations relatives à l'énergie électrique comprennent des informations relatives à une requête d'ajustement de l'équilibre offre-demande d'électricité, ladite requête provenant de l'extérieur de la propriété ou de la zone ; et
les informations relatives une requête d'ajustement de l'équilibre offre-demande d'électricité comprennent au moins l'un des éléments suivants une période de demande de négawatts comprenant au moins une période qui constitue une cible de la requête d'ajustement de l'équilibre offre-demande d'électricité, ladite requête présentant une tendance à la suppression de la consommation d'électricité, et
une période de demande de posiwatts comprenant au moins une période qui constitue une cible de la requête d'ajustement de l'équilibre offre-demande d'électricité, ladite requête présentant une tendance à promouvoir la consommation d'électricité
**caractérisé en ce que** :
l'opération spéciale comprend
une opération de retour d'huile de temps de chauffage qui est une opération de retour d'huile pendant une opération de chauffage de l'appareil à cycle frigorifique ; et
l'unité de détermination (72) est configurée pour déterminer au moins l'un des éléments suivants
le moment d'opération spéciale auquel l'opération de retour d'huile de temps de chauffage doit être exécutée dans la période de demande de négawatts, et
le moment d'opération spéciale auquel l'opération de retour d'huile de temps de chauffage doit être évitée dans la période de demande de positawatts.

2. Système de commande de fonctionnement (100) selon la revendication 1, dans lequel :
l'opération spéciale comprend en outre au moins l'un des éléments suivants une opération de retour d'huile de temps de refroidissement, qui est une opération de retour d'huile pendant une opération de refroidissement de l'appareil à cycle frigorifique, et
une opération de dégivrage pendant une opération de chauffage de l'appareil à cycle frigorifique ; et
l'unité de détermination (72) est en outre configurée pour déterminer au moins l'un des éléments suivants
le moment d'opération spéciale au cours duquel l'opération de retour d'huile de temps de refroidissement doit être évitée dans la période de demande de négawatts, et
le moment d'opération spéciale au cours duquel l'opération de dégivrage doit être exécutée dans la période de demande de négawatts.

3. Système de commande de fonctionnement (100) selon la revendication 1, dans lequel :
l'opération spéciale comprend en outre au moins l'un des éléments suivants une opération de retour d'huile de temps de refroidissement, qui est une opération de retour d'huile pendant une opération de refroidissement de l'appareil à cycle frigorifique, et
une opération de dégivrage pendant une opération de chauffage de l'appareil à cycle frigorifique ; et
l'unité de détermination (72) est en outre configurée pour déterminer au moins l'un des éléments suivants
le moment d'opération spéciale auquel l'opération de retour d'huile de temps de refroidissement doit être exécutée pendant la période de demande de posiwatts,
le moment d'opération spéciale auquel l'opération de dégivrage doit être évitée dans la période de demande de posiwatts, et
le moment d'opération spéciale auquel au moins une opération parmi l'opération de retour d'huile de temps de chauffage et l'opération de dégivrage doit être exécutée dans une période immédiatement avant la période de demande de posiwatts.

4. Système de commande de fonctionnement (100) selon l'une quelconque des revendications 1 à 3, dans lequel
l'unité de détermination (72) comprend :
une première unité de prédiction (72a) configurée pour prédire, sur la base de données de fonctionnement de l'appareil à cycle frigorifique, un moment auquel l'opération spéciale doit être exécutée ; et
une première unité de vérification (72b) configurée pour vérifier si l'opération spéciale peut être exécutée ou non dans une période cible de demande comprenant au moins une période qui constitue une cible de la requête d'ajustement de l'équilibre offre-demande d'électricité, et
l'unité de détermination est configurée pour déterminer le moment d'opération spéciale sur la base d'un résultat de prédiction de la première unité de prédiction et d'un résultat de vérification de la première unité de vérification.

5. Système de commande de fonctionnement (100) selon la revendication 4, dans lequel
la première unité de vérification (72b) est configurée pour vérifier si un moment prédit par la première unité de prédiction (72a) auquel l'opération spéciale doit être exécutée peut être décalé vers la période de temps cible de la demande.

6. Système de commande de fonctionnement (100) selon la revendication 4 ou 5, dans lequel
l'unité de détermination (72) comprend en outre
une deuxième unité de prédiction (72c) configurée pour prédire une augmentation et une diminution de la puissance électrique consommée par l'appareil à cycle frigorifique en raison de l'opération spéciale, et, sur la base, en outre, d'un résultat de prédiction de la deuxième unité de prédiction, déterminer le moment d'opération spéciale.

7. Système de commande de fonctionnement (100) selon la revendication 6, dans lequel
l'unité de détermination (72) est configurée pour,
dans le cas où la deuxième unité de prédiction (72c) prédit une diminution de la puissance électrique à consommer, déterminer le moment d'opération spéciale de manière à ce que le moment d'opération spéciale soit inclus dans au moins une période de temps qui constitue une cible de la requête d'ajustement de l'équilibre offre-demande d'électricité, ladite requête présentant une tendance à la suppression de la consommation d'électricité, et,
dans le cas où la deuxième unité de prédiction prédit une augmentation de la puissance électrique à consommer, déterminer le moment d'opération spéciale de manière à ce que le moment d'opération spéciale soit inclus dans au moins une période de temps qui constitue une cible de la requête d'ajustement de l'équilibre offre-demande d'électricité, ladite requête présentant une tendance à la promotion de la consommation d'électricité.

8. Système de commande de fonctionnement (100) selon l'une quelconque des revendications 1 à 7, dans lequel
les informations relatives à l'énergie électrique comprennent les informations relatives à une requête d'ajustement de l'équilibre offre-demande d'électricité, les informations relatives à une requête d'ajustement de l'équilibre offre-demande d'électricité comprennent une valeur cible de la puissance électrique consommée à un moment prédéterminé, et
le système de commande de fonctionnement comprend en outre une deuxième unité de vérification (72d) configurée pour comparer la valeur cible de la puissance électrique consommée à une valeur de puissance électrique consommée prévue sur la base des données de fonctionnement de l'appareil à cycle frigorifique afin de vérifier si la requête d'ajustement de l'équilibre offre-demande d'électricité est une demande visant à réduire la consommation d'électricité ou une demande visant à promouvoir la consommation d'électricité.

9. Système de commande de fonctionnement (100) selon l'une quelconque des revendications 1 à 8, dans lequel :
les informations relatives à l'énergie électrique comprennent en outre des informations de pointe comprenant au moins un moment de pointe qui est un moment où un pic se produit dans une tendance liée à la puissance électrique totale de la propriété ou de la zone, et
l'unité de détermination (72) est configurée pour déterminer le moment d'opération spéciale sur la base des informations relatives à une requête d'ajustement de l'équilibre offre-demande d'électricité et des informations de pointe.

10. Système de commande de fonctionnement (100) selon l'une quelconque des revendications 1 à 9, dans lequel
les informations relatives à l'énergie électrique comprennent en outre des informations relatives au prix du marché de l'énergie électrique, et
l'unité de détermination (72) est configurée pour
déterminer le moment d'opération spéciale en considérant une période pendant laquelle le prix du marché de l'énergie électrique inclus dans les informations relatives au prix du marché de l'énergie électrique est égal ou supérieur à un premier seuil, comme au moins une période qui constitue une cible de la requête d'ajustement de l'équilibre offre-demande d'électricité, ladite requête présentant une tendance à la suppression de la consommation d'électricité, et déterminer le moment d'opération spéciale en considérant une période pendant laquelle un prix du marché de l'énergie électrique inclus dans les informations relatives au prix du marché de l'énergie électrique est égal ou inférieur à un deuxième seuil, comme au moins une période qui constitue la cible de la requête d'ajustement de l'équilibre offre-demande d'électricité, ladite requête présentant une tendance à la promotion de la consommation d'électricité.

11. Appareil de contrôle de fonctionnement comprenant :
une unité de stockage (71) configurée pour stocker des informations relatives à l'énergie électrique ; et
une unité de détermination (72) configurée pour déterminer, sur la base des informations relatives à l'énergie électrique, un moment d'opération spéciale auquel une opération spéciale d'un appareil à cycle frigorifique installé dans au moins une propriété ou au moins une zone doit être exécutée,
dans lequel
les informations relatives à l'énergie électrique comprennent des informations relatives à une requête d'ajustement de l'équilibre offre-demande d'électricité, ladite requête provenant de l'extérieur de la propriété ou de la zone, et
les informations relatives à une requête d'ajustement de l'équilibre offre-demande d'électricité comprennent au moins l'un des éléments suivants une période de demande de négawatts comprenant au moins une période qui constitue une cible de la requête d'ajustement de l'équilibre offre-demande d'électricité, ladite requête présentant une tendance à la suppression de la consommation d'électricité, et
une période de demande de posiwatts comprenant au moins une période qui constitue une cible de la requête d'ajustement de l'équilibre offre-demande d'électricité, ladite requête présentant une tendance à promouvoir la consommation d'électricité, **caractérisé en ce que** :
l'opération spéciale comprend
une opération de retour d'huile de temps de chauffage qui est une opération de retour d'huile pendant une opération de chauffage de l'appareil à cycle frigorifique ; et
l'unité de détermination (72) est configurée pour déterminer au moins l'un des éléments suivants
le moment d'opération spéciale auquel l'opération de retour d'huile de temps de chauffage doit être exécutée dans la période de demande de négawatts, et
le moment d'opération spéciale auquel l'opération de retour d'huile de temps de chauffage doit être évitée dans la période de demande de posiwatts.

12. Procédé de commande de fonctionnement comprenant :
le stockage d'informations relatives à l'énergie électrique ; et
la détermination (S4-S9), sur la base des informations relatives à l'énergie électrique, d'un moment d'opération spéciale auquel une opération spéciale d'un appareil à cycle frigorifique installé dans au moins une propriété ou au moins une zone doit être exécutée,
dans lequel
les informations relatives à l'énergie électrique comprennent des informations relatives à une requête d'ajustement de l'équilibre offre-demande d'électricité, ladite requête provenant de l'extérieur de la propriété ou de la zone, et
les informations relatives à une requête d'ajustement de l'équilibre offre-demande d'électricité comprennent au moins l'un des éléments suivants une période de demande de négawatts comprenant au moins une période qui constitue la cible de la requête d'ajustement de l'équilibre offre-demande d'électricité, ladite requête présentant une tendance à réduire la consommation d'électricité, et
une période de demande de posiwatts comprenant au moins une période qui constitue la cible de la requête d'ajustement de l'équilibre offre-demande d'électricité, ladite requête présentant une tendance à promouvoir la consommation d'électricité, **caractérisé en ce que** :
l'opération spéciale comprend
une opération de retour d'huile de temps de chauffage qui est une opération de retour d'huile pendant une opération de chauffage de l'appareil à cycle frigorifique ; et
la détermination du moment d'opération spéciale comprend la détermination d'au moins l'un des éléments suivants
le moment d'opération spéciale auquel l'opération de retour d'huile de temps de chauffage doit être exécutée dans la période de demande de négawatts, et
le moment d'opération spéciale auquel l'opération de retour d'huile de temps de chauffage doit être évitée dans la période de demande de posiwatts.
